# EUROPEAN PATENT APPLICATION

(11) **EP 4 545 717 A1**
(43) Date of publication of application: **30.04.2025**
(21) Application number: 23854182.5
(22) Date of filing: 21.07.2023
(51) Int. Cl.: E03D 11/02

(54) **SPRAY HEAD, FLUSHING SYSTEM, AND TOILET**

(30) Priority: 18.08.2022 CN 202210995186; 18.08.2022 CN 202210995180
(71) Applicant: Quanzhou Komoo Intelligent Kitchen & Bath Co., Ltd, Quanzhou, Fujian 362300 (CN)
(72) Inventor: LIN, Xiaofa, Quanzhou, Fujian 362300 (CN); LIN, Xiaoshan, Quanzhou, Fujian 362300 (CN); LIU, Zuhua, Quanzhou, Fujian 362300 (CN); ZHENG, Jinyang, Quanzhou, Fujian 362300 (CN); XU, Yanxin, Quanzhou, Fujian 362300 (CN); LIN, Shan, Quanzhou, Fujian 362300 (CN)
(74) Representative: Meissner Bolte Nürnberg
(86) International application number: PCT/CN2023/108500
(87) International publication number: WO 2024/037277

(57) **Abstract**

A spray head, a flushing system, and a toilet. The spray head is applied to toilet drainage, and comprises: a body (2), the body (2) being provided with a first water path (201) and a second water path (202), and also a first water inlet (201a) and first water outlet (201b) communicated with the first water path (201), and a second water inlet (202a) and second water outlet (202b) communicated with the second water path (202); and an adapter (3), the adapter (3) being mounted on the body (2); the adapter (3) being provided with a flow channel (301) and also an inlet (301a) and outlet (301b) communicated with the flow channel (301), the outlet (301b) being communicated with the first water inlet (201a); wherein the first water outlet (201b) and the second water outlet (202b) have different flow areas.

## Description

This application claims priorities to Chinese patent application No. 202210995180.6 filed with the CNIPA on August 18, 2022 and entitled "Spray Head and Toilet", and Chinese patent application No. 202210995186.3 filed with the CNIPA on August 18, 2022 and entitled "Toilet Spray Head, Flushing System and Toilet", the contents of which should be understood to be incorporated herein by reference.

### Technical Field

The present application relates to, but is not limited to, the field of toilet technologies, and particularly relates to a spray head, a flushing system, and a toilet.

### Background

Some toilets with spray siphon technology adopt a single-way spray manner. By a process of toilet ring-brushing, spraying and ring-brushing, the toilet generates a siphon effect to realize the function of toilet sewage discharge.

### Summary

Embodiments of the present application provide a spray head, a flushing system, and a toilet.

In one aspect, an embodiment of the present application provides a spray head applicable to toilet drainage, including: a body provided with a first water path, a second water path, a first water inlet and a first water outlet that are communicated with the first water path, and a second water inlet and a second water outlet that are communicated with the second water path; and an adapter mounted on the body, the adapter being provided with a flow channel, and an inlet and an outlet that are communicated with the flow channel, the outlet being communicated with the first water inlet. A flow area of the first water outlet is different from that of the second water outlet.

In another aspect, an embodiment of the present application provides a flushing system including the spray head according to any one of the above embodiments, the body being configured to be mounted at a spray port of a toilet body. The flushing system further includes: a first water supply assembly for supplying water to one of the first and second water outlets that has a greater flow area; and a second water supply assembly for supplying water to one of the first and second water outlets that has a smaller flow area. A water supply pressure of the first water supply assembly is greater than a water supply pressure of the second water supply assembly.

In another aspect, an embodiment of the present application provides a toilet including a toilet body provided with a spray port and a flushing system according to any one of the above embodiments. One of the first and second water outlets that has a smaller flow area is close to a bottom of the toilet body.

Other aspects will become apparent after reading and understanding the drawings and detailed description.

### Brief Description of Drawings

The drawings are used for providing an understanding of technical solutions of the present disclosure, and constitute a part of the specification. They are used together with embodiments of the present disclosure to explain the technical solutions of the present disclosure, and do not constitute a restriction on the technical solutions of the present disclosure.
FIG. 1 is a first sectional schematic diagram of a spray head mounted on a toilet body according to some exemplary embodiments of the present application.
FIG. 2 is an enlarged sectional schematic diagram of a partial region E in FIG. 1.
FIG. 3 is a first structural schematic diagram of a spray head according to some exemplary embodiments of the present application.
FIG. 4 is a second sectional schematic diagram of a spray head mounted on a toilet body according to some exemplary embodiments of the present application.
FIG. 5 is an enlarged sectional schematic diagram of a partial region F in FIG. 4.
FIG. 6 is a second structural schematic diagram of a spray head according to some exemplary embodiments of the present application.
FIG. 7 is a sectional schematic diagram of a spray head according to some exemplary embodiments of the present application.
FIG. 8 is a first structural schematic diagram of a body according to some exemplary embodiments of the present application.
FIG. 9 is a first schematic diagram of mounting of an adapter and a body according to some exemplary embodiments of the present application.
FIG. 10 is a second schematic diagram of mounting of an adapter and a body according to some exemplary embodiments of the present application.
FIG. 11 is a second structural schematic diagram of a body according to some exemplary embodiments of the present application.
FIG. 12 is a third structural schematic diagram of a body according to some exemplary embodiments of the present application.
FIG. 13 is a first sectional schematic diagram of a body according to some exemplary embodiments of the present application.
FIG. 14 is a second sectional schematic diagram of a body according to some exemplary embodiments of the present application.
FIG. 15 is a third sectional schematic diagram of a body according to some exemplary embodiments of the present application.
FIG. 16 is a schematic diagram showing equivalent circle diameters of flow areas of a first water outlet and a second water outlet of a spray head according to some exemplary embodiments of the present application.
FIG. 17 is a first structural schematic diagram of an adapter according to some exemplary embodiments of the present application.
FIG. 18 is a second structural schematic diagram of an adapter according to some exemplary embodiments of the present application.
FIG. 19 is a structural schematic diagram of a fixing nut according to some exemplary embodiments of the present application.
FIG. 20 is a structural schematic diagram of a sealing rubber pad according to some exemplary embodiments of the present application.
FIG. 21 is a structural schematic diagram of a sealing ring according to some exemplary embodiments of the present application.
FIG. 22 is a sectional schematic diagram of a spray head mounted on a toilet body according to some other exemplary embodiments of the present application.
FIG. 23 is a structural schematic diagram of a spray head according to some other exemplary embodiments of the present application.
FIG. 24 is a sectional schematic diagram of a spray head according to some other exemplary embodiments of the present application.
FIG. 25 is a partial sectional schematic diagram of a spray head mounted on a toilet body according to some other exemplary embodiments of the present application.
FIG. 26 is a schematic diagram of connection relationship between a flushing system and a toilet body according to some exemplary embodiments of the present application;
FIG. 27 is a structural schematic diagram of a flushing system according to some exemplary embodiments of the present application.
FIG. 28 is a structural schematic diagram of a hybrid valve according to some exemplary embodiments of the present application;
FIG. 29 is a sectional schematic diagram of a hybrid valve according to some exemplary embodiments of the present application.
FIG. 30 is a schematic diagram of arrangement relationship between a spray head and a pipe-passaging hole on a toilet body according to some exemplary embodiments of the present application.
FIG. 31 is a partial sectional schematic diagram of the toilet in FIG. 30 in which a pipe-passaging hole is arranged in region D.
FIG. 32 is a partial sectional schematic diagram of the toilet in FIG. 30 in which a pipe-passaging hole is arranged in region B.
FIG. 33 is a partial sectional schematic diagram of the toilet in FIG. 30 in which a pipe-passaging hole is arranged in region C.

### Reference signs:

1-Toilet body, 101-Spray port, 102-Pipe-passaging hole, 103-Water tank;
2-Body, 201-First water path, 201a-First water inlet, 201b-First water outlet;
202-Second water path, 202a-Second water inlet, 202b-Second water outlet;
203-Separating rib, 203a-First segment, 203b-Second segment, 203c-Third segment;
204-Sealing groove, 205-Limiting plate, 206-Fixing nut, 207-Sealing rubber pad;
208-Avoidance groove, 209-Limiting buckle, 210-Limiting portion, 211-Limiting groove, 212-Notch;
3-Adapter, 301-Flow channel, 301a-Inlet, 301b-Outlet, 302-Socket portion, 303-Extension portion, 304-Limiting protrusion;
4-Water-passaging groove, 401-Flow guide wall;
5-Sealing ring;
6-First water supply assembly, 601-First water pipe, 602-Booster pump, 603-Outlet pipe;
7-Second water supply assembly, 701-Water supply pipe, 702-Make-up pipe, 703-Three-way connecting pipe, 704-Angle valve;
8-Ring-brushing water path, 801-Ring-brushing module, 802-Ring-brushing water pipe;
9-Control valve, 901-Hybrid valve, 902-Dispensing valve, 903-First interface, 904-Second interface, 905-Third interface, 906-Fourth interface, 907-Fifth interface.

### Detailed Description

The technical solutions of the present disclosure will be described below in conjunction with the accompanying drawings and through implementations. It is to be understood that the embodiments described herein are merely used to explain the technical solutions in the present disclosure, and are not intended to limit the technical solutions in the present disclosure.

At present, in order that a spray head with a single water path can operate normally under both low and high water pressure conditions, or due to limitations in water pump power, it is usually needed to reduce a diameter of the spray port of the spray head to meet the drainage requirements of the toilet under different water pressures as much as possible. Simply reducing the diameter of the spray port of the spray head will result in more noticeable noise of the toilet when the water pressure is high. Increasing the diameter of the spray port of the spray head will lead to poor drainage effect of the toilet when the water pressure is low, and in this case, a high-power water pump is needed to achieve the drainage effect. When a high-power water pump is used, there will also be a problem during a power outage that drainage effect of the toilet is poor since the backup battery's capacity may not enable the water pump to run at full power. The spray head provided by the embodiment of the present application may meet different usage scenarios, and enable the toilet obtain a better drainage effect.

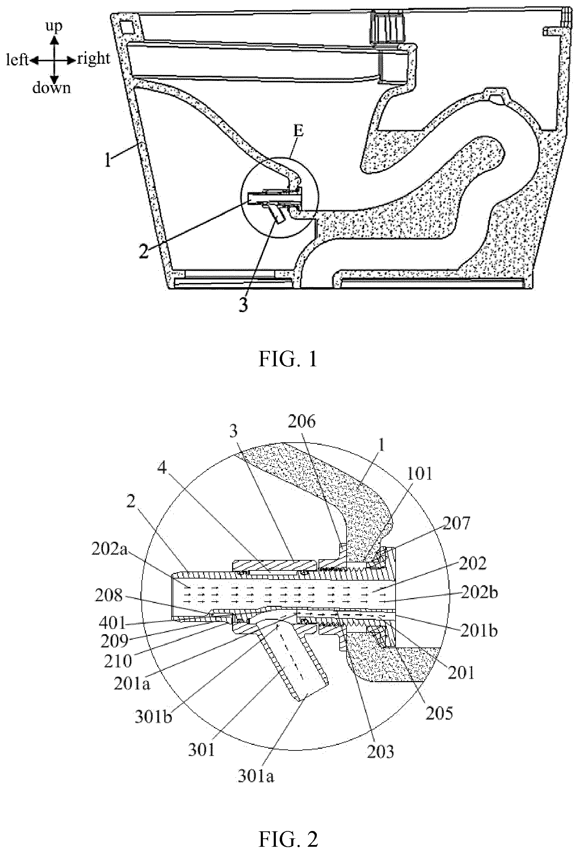

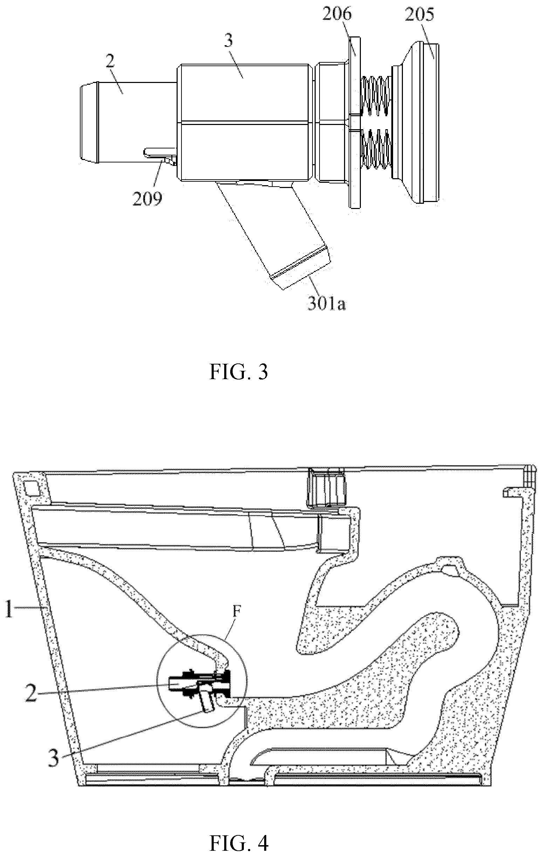

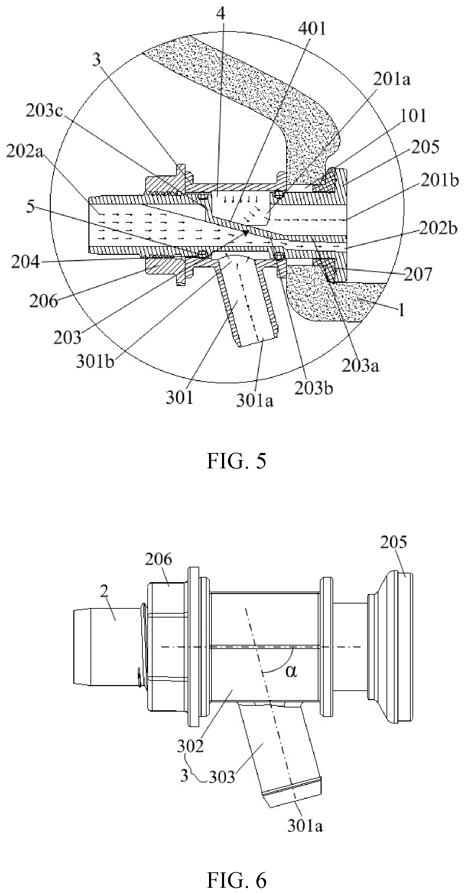

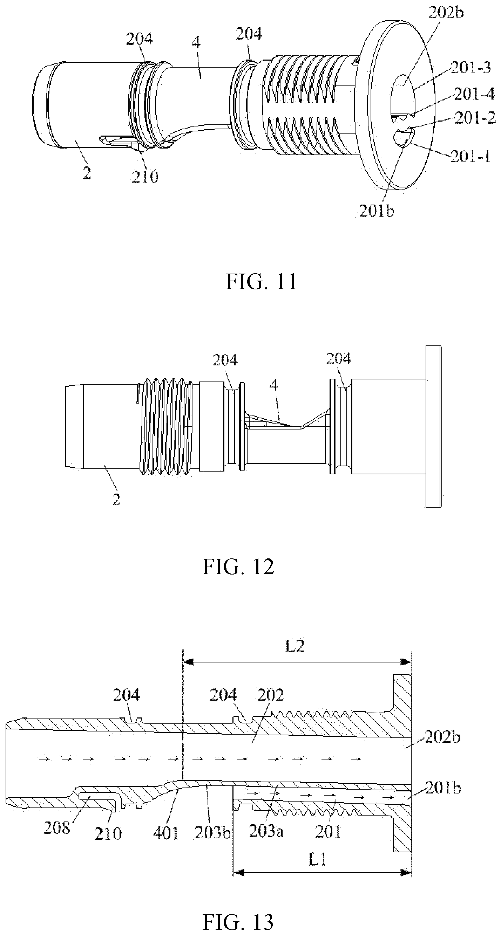

In an embodiment of the present application, as shown in FIGS. 1 to 21, a spray head is provided, which is applied to a toilet to assist the toilet in drainage. As shown in FIGS. 2 and 5, the spray head may be mounted at a spray port 101 of a toilet body 1, and the spray head may include a body 2 and an adapter 3 sleeved on an outer wall of the body 2. The toilet body 1 may be made of a ceramic material, a plastic material, or the like. A main body portion of the body 2 may be provided as a hollow cylinder with an equal diameter, or a hollow cylinder with a variable cross section, or a hollow conical frustum, or the like. As shown in FIGS. 11 and 12, for example, the main body portion of the body 2 may be provided as a hollow cylinder. The adapter 3 is rotatable about a central axis of the body 2 in a lengthwise direction. For example, a state where the adapter 3 has been sleeved on the body 2 is as shown in FIGS. 3 and 6. The body 2 may be made of a metal, plastic, or the like.

As shown in FIG. 2, the body 2 is provided with a first water path 201, a second water path 202, a first water inlet 201a and a first water outlet 201b that are communicated with the first water path 201, and a second water inlet 202a and a second water outlet 202b that are communicated the second water path 202. As shown in FIGS. 1 and 4, both the first water outlet and the second water outlet may be provided toward a water inlet of a siphon elbow in the toilet, so that a better flushing effect can be obtained regardless of whether the first water path 201 or the second water channel 202 is used for flushing. A flow area of the first water outlet 201b is different from a flow area of the second water outlet 202b.

As shown in FIG. 2, the adapter 3 is provided with a flow channel 301, and an inlet 301a and an outlet 301b that are communicated with the flow channel 301. A shape of the inlet 301a may be circular or the like, and the inlet 301a may be used for connecting a water pipe for supplying water to the spray head. The adapter 3 may be communicated with one of the first water path 201 and the second water path 202. In the embodiment of the present application, illustration of a technical solution is made by taking a case in which the adapter 3 is communicated with the first water path 201 as an example. As shown in FIG. 2, the outlet 301b of the adapter 3 is communicated with the first water inlet 201a.

The spray head provided in the embodiment of the present application has two water paths, that is, a first water path and a second water path, and the water outlets of the two water paths have different flow areas, so that a toilet mounted with the spray head may adapt to various usage scenarios. For example, when a water supply pressure is high, a water path with a greater flow area at the water outlet can be selected for water supply, which may effectively reduce the flushing noise and obtain an excellent flushing effect. When the water supply pressure is low, a water path with a smaller flow area at the water outlet can be selected for water supply, which may obtain a better flushing effect, and ensure that basically the same flushing effect can be obtained under different water supply pressures. Alternatively, two water paths may be selected to supply water simultaneously to meet the needs of different users. Furthermore, relative adjustability of the adapter 3 and the body 2 enables the adjustability of the inlet 301a, so as to improve an adjustment flexibility of the spray head, to adapt to arrangement forms of different toilets, thereby improving practicality of the spray head. In actual use of the toilet, a water source is communicated with the second water inlet 202a and the inlet 301a of the spray head to supply spray water to the toilet.

In some exemplary embodiments, as shown in FIGS. 2 and 5, the spray head may further include a water-passaging groove 4. The water-passaging groove 4 is located between the adapter 3 and the body 2. The outlet 301b of the adapter 3 may be communicated with the first water inlet 201a via the water-passaging groove 4. As shown in FIGS. 2 and 5, spray water may enter the flow channel 301 from the inlet 301a, after entering the water-passaging groove 4 via the outlet 301b, flow into the first water inlet 201a, then pass through the first water path 201, and be sprayed out of the first water outlet 201b. As shown in FIGS. 2 and 5, the water-passaging groove 4 may be provided circumferentially around the body 2. According to the design of a rotation angle range of the adapter 3 relative to the body 2 in practical application, in an example, the water-passaging groove 4 may be provided to surround half of a circumference of the body 2, or the water-passaging groove 4 may be provided to surround an entire circumference of the body 2, or the like.

In some exemplary embodiments, as shown in FIG. 2, one of the adapter 3 and the body 2 may be provided with an annular groove, and an annular water-passaging groove 4 is enclosed and formed by the annular groove and the other of the adapter 3 and the body 2. For example, an annular groove may be provided in an inner wall of the adapter 3, so that an annular water-passaging groove 4 is enclosed and formed by the annular groove and an outer wall of the body 2. Alternatively, an annular groove is provided in an outer wall of the body 2, so that an annular water-passaging groove 4 is enclosed and formed by the annular groove and an inner wall of the adapter 3. Alternatively, each of the outer wall of the body 2 and the inner wall of the adapter 3 is provided with an annular groove, and an annular water-passaging groove 4 is enclosed and formed by the two annular grooves. For example, the water-passaging groove 4 may have an annular shape. The water-passaging groove 4 is provided along a circumferential direction of the body 2, and a depth of the water-passaging groove 4 is set to a constant value, and the depth of the water-passaging groove 4 is a dimension along a radial direction of the water-passaging groove 4, as shown in FIG. 2. Alternatively, the water-passaging groove 4 is provided along a circumferential direction of the body 2, a depth of the water-passaging groove 4 may be configured to increase sequentially, as shown in FIG. 5.

In some exemplary embodiments, as shown in FIG. 2, the outlet 301b may be located at a middle portion of the water-passaging groove 4 along an axial direction (that is, in a left-right direction) of the body 2. The outlet 301b is not located at an end portion of the water-passaging groove 4 along the axial direction of the body 2. It may, on the one hand, reduce assembly accuracy requirements of the adapter 3 and the body 2, reduce the accuracy requirements of structures such as the limiting structure, and reduce assembly cost, and on the other hand, be beneficial to arrange a sealing structure between the adapter 3 and the body 2, and improve sealing performance of the entire spray head.

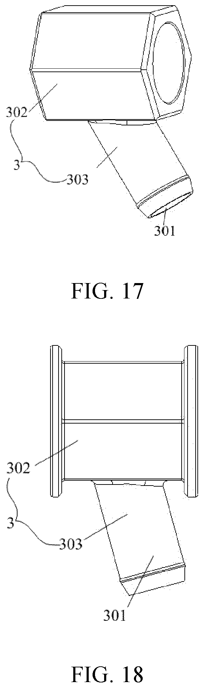

In some exemplary embodiments, as shown in FIGS. 17 and 18, the adapter 3 may include an annular socket portion 302 and a hollow cylindrical extension portion 303, the extension portion 303 extends in a direction away from the socket portion 302, and the socket portion 302 is communicated with the extension portion 303. The socket portion 302 and the extension portion 303 may be manufactured by an integral molding method, for example, the integral molding method may be casting, or injection molding, or the like.

As shown in FIG. 6, the socket portion 302 may be sleeved on the outer wall of the body 2, and the extension portion 303 may extend along a radial direction of the body 2 in a direction away from a central axis of the body 2 in a lengthwise direction. An included angle between a central axis of the extension portion 303 along a lengthwise direction thereof and a central axis of the socket portion 302 along a lengthwise direction thereof is denoted as α, and α may be an acute angle or an obtuse angle. The inlet 301a may be provided at an end of the extension portion 303 away from the body 2. A port where the extension portion 303 is communicated with the socket portion 302 is the outlet 301b.

In some exemplary embodiments, as shown in FIGS. 17 and 18, an outer wall of the socket portion 302 may be designed differently. For example, a partial region of the outer wall of the socket portion 302 may be thinned to reduce an overall weight of the spray head and reduce the production cost of a product.

In some exemplary embodiments, as shown in FIGS. 2 and 5, at least a portion of a bottom of the water-passaging groove 4 may be provided to be inclined to form a flow guide wall 401. For example, an entire bottom of the water-passaging groove 4 is provided to be inclined, or a partial region of the bottom of the water-passaging groove 4 close to the first water inlet 201a is provided to be inclined. The flow guide wall 401 may guide spray water in a direction toward the first water outlet 201b. By providing the flow guide wall 401, the spray water may smoothly flow into the first water path 201 from the water-passaging groove 4, and the spray water may smoothly flow into the second water path 202 from the second water inlet 202a, thereby obtaining a better flushing ability of the spray water as a whole.

In some exemplary embodiments, as shown in FIGS. 2 and 5, a flow guide surface of the flow guide wall 401 may be provided as an oblique flat surface or as an arc surface, so as to meet requirements of different water path flow areas and improve flow performance of the fluid.

In some exemplary embodiments, as shown in FIGS. 2 and 5, a channel is provided in the body 2, and a separating rib 203 is provided in the channel. The separating rib 203 is used to divide the channel into the first water path 201 and the second water path 202.

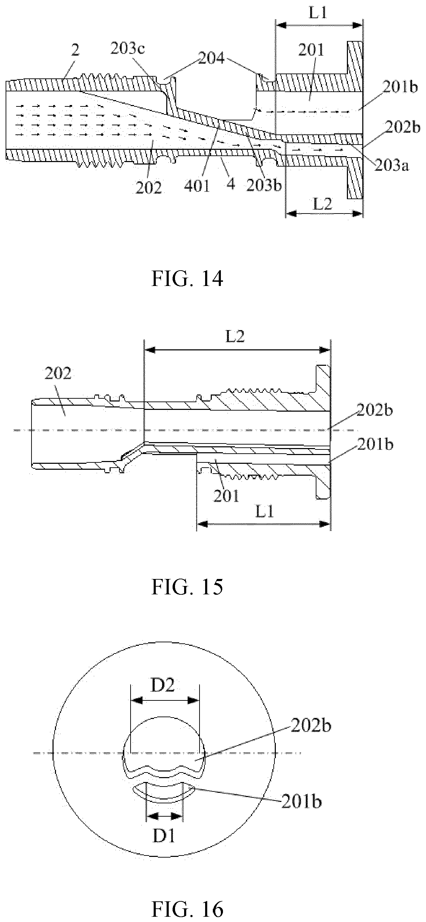

In some exemplary embodiments, as shown in FIG. 13, the separating rib may include a first segment 203a and a second segment 203b that are connected smoothly. Alternatively, as shown in FIG. 14, the separating rib may include a first segment 203a, a second segment 203b, and a third segment 203c that are connected smoothly. For example, the first segment 203a, the second segment 203b, and the third segment 203c may be sequentially provided along the lengthwise direction of the body 2, and the first segment 203a is closer to the first water outlet 201b than the second segment 203b and the third segment 203c. As shown in FIGS. 13 and 14, a portion of the separating rib and a portion of the water-passaging groove 4 may be shared, so as to simplify the design structure inside the spray head and reduce an overall weight of a product. For example, the second segment 203b of the separating rib may serve as the flow guide wall 401.

In some exemplary embodiments, as shown in FIGS. 2 and 5, a flow area of the first water path 201 may be designed to be a constant value, the flow area of the first water path 201 may be the same as a flow area of the first water outlet 201b, and a shape of the first water path 201 in a plane perpendicular to the lengthwise direction thereof may be the same as a shape of the first water outlet 201b. Alternatively, a flow area of the first water path 201 is designed to be a non-constant value in the lengthwise direction along the first water path 201, and a flow area of a region of the first water path 201 close to the first water outlet 201b may be the same as a flow area of the first water outlet 201b. Alternatively, a flow area of the first water path 201 gradually decreases in a direction toward the first water outlet 201b. Alternatively, a flow area of the first water path 201 gradually increases in a direction toward the first water outlet 201b. By designing the flow area of the first water path 201 with reference to the flow area of the first water outlet 201b, a sharp change of a flow area at a communication between the first water path 201 and the first water outlet 201b can be avoided, so as to reduce the loss of energy in the flow process of the spray water and obtain a better flushing effect. A flow area of the second water path 202 may be designed with reference to the flow area of the first water path 201. For example, the flow area of the second water path 202 may be designed to be the same as a flow area of the second water outlet 202b. Alternatively, a flow area of a region of the second water path 202 close to the second water outlet 202b is designed to be the same as a flow area of the second water outlet 202b.

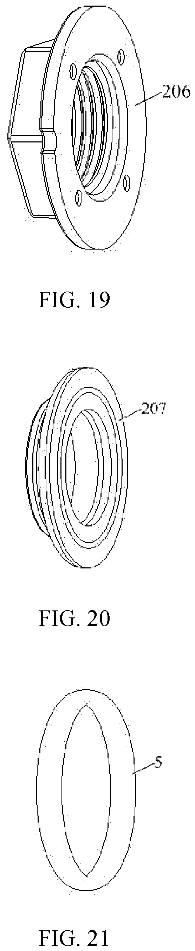

In some exemplary embodiments, as shown in FIG. 5, a plurality of sealing rings 5 may be provided between the adapter 3 and the body 2, and a structure of the sealing ring 5 is shown in FIG. 21. The plurality of sealing rings 5 may be respectively provided on both sides of the outlet 301b along the body 2 in its lengthwise direction, and the plurality of sealing rings 5 realize sealing of a mating area between the adapter 3 and the body 2, so as to improve the sealing performance of the spray head and avoid leakage. For example, the sealing ring 5 may be an oil sealing or the like.

In some exemplary embodiments, as shown in FIGS. 13 and 14, one of the adapter 3 and the body 2 may be provided with a sealing groove 204. FIGS. 13 and 14 illustrate an example in which the body 2 is provided with the sealing groove 204. As shown in FIG. 5, the sealing ring 5 may be embedded into the sealing groove 204, and the sealing ring 5 is in contact and cooperation with the adapter 3. In the embodiment of the present application, illustration of a technical solution is made by taking an example in which the sealing groove 204 is provided on the body 2. As shown in FIG. 5, the sealing ring 5 may be squeezed tightly in the sealing groove 204, or may be bonded in the sealing groove 204, or the like. During the assembly of the spray head, the sealing ring 5 may be mounted in the sealing groove 204 of the body 2 first, and then the adapter 3 is mounted.

In some exemplary embodiments, as shown in FIGS. 5 and 6, the spray head may further include a limiting plate 205 and a fixing nut 206. A structure of the fixing nut 206 is shown in FIG. 19. The limiting plate 205 may be provided in an annular shape and fixed at one end of the body 2. For example, the limiting plate 205 may be sleeved on and fixed to the outer wall of the body 2. For example, the limiting plate 205 and the body 2 may be integrally formed, for example, by injection molding or the like. Alternatively, the limiting plate 205 and the body 2 may be separately formed and then welded. Alternatively, the limiting plate 205 and the body 2 may be separately formed and then fixed by threaded connection or the like. After the spray head is mounted in place, the fixing nut 206 may be sleeved on and fixed to the outer wall of the body 2, and the limiting plate 205 and the fixing nut 206 are jointly clamped at the spray port 101 of the toilet body 1 along the body 2 in its lengthwise direction to realize the fixation of the spray head. As shown in FIGS. 2 and 5, the fixing nut 206 and the limiting plate 205 are respectively located on two sides of the spray port 101 of the toilet body 1 along a lengthwise direction of the spray port 101, and the limiting plate 205 may be located in a bowl cavity of the toilet body 1.

In some exemplary embodiments, as shown in FIGS. 2 and 5, the spray head may further include a sealing rubber pad 207. The sealing rubber pad 207 may be made of a rubber material or the like. The sealing rubber pad 207 may be sleeved on the outer wall of the body 2, and may be annular. The sealing rubber pad 207 is in contact with the limiting plate 205, and is squeezed between the toilet body 1 and the limiting plate 205. A structure of the sealing rubber pad 207 is shown in FIG. 20.

In a process of mounting the spray head, one end of the body 2 away from the limiting plate 205 may be inserted into the spray port 101 from one side inside the bowl cavity of the toilet body 1, and an opening size of the spray port 101 is greater than an outer contour size of a region of the body 2 where the limiting plate 205 is not provided, to ensure smooth mounting of the spray head. Moreover, the opening size of the spray port 101 is smaller than an outer contour size of the limiting plate 205 to ensure that the spray head is firmly mounted at the spray port 101, as shown in FIG. 5.

In some exemplary embodiments, as shown in FIG. 5, the adapter 3 may be clamped between the fixing nut 206 and the spray port 101 of the toilet body 1. Alternatively, as shown in FIG. 2, the adapter 3 may be provided at a side of the fixing nut 206 away from the limiting plate 205. For example, the adapter 3 may be snapped to the body 2. Such provision may realize a detachable assembly of the adapter 3 and the body 2, facilitate the adjustment of a rotation angle of the adapter 3 relative to the body 2, and improve the adjustment flexibility and adaptability of a spray head product.

In some exemplary embodiments, as shown in FIG. 2, the outer wall of the body 2 may be provided with an avoidance groove 208 that is recessed along a radial direction of the body 2 and toward an interior of the body 2. The outer wall of the body 2 may further be provided with a limiting buckle 209. The limiting buckle 209 may be connected to a groove wall of the avoidance groove 208, and the limiting buckle 209 may be elastically deformed along a radial direction of the body 2. As shown in FIG. 2, a limiting portion 210 may be provided at one end of the limiting buckle 209 away from the groove wall, and the limiting portion 210 may be located on a side close to the fixing nut 206. At least a portion of the limiting portion 210 may protrude from the outer wall of the body 2, and the limiting portion 210 is used to prevent the adapter 3 from being separated from the body 2 along the lengthwise direction of the body 2. As shown in FIG. 2, the limiting portion 210 and the fixing nut 206 may jointly limit a position of the adapter 3 with respect to the body 2.

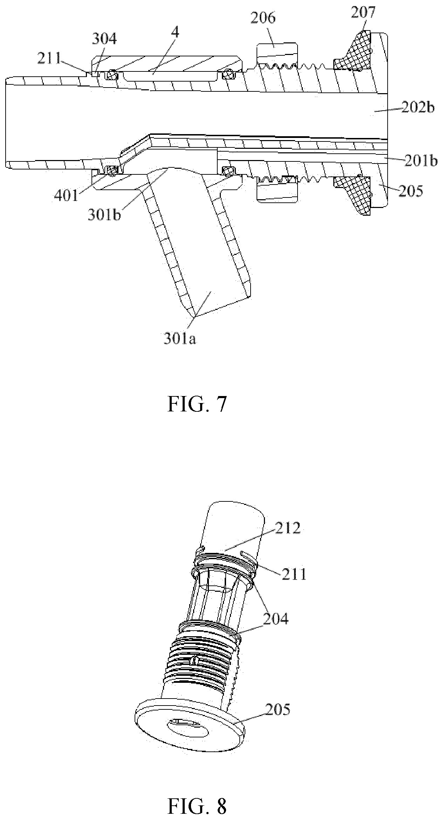

In some exemplary embodiments, as shown in FIGS. 7 to 10, the outer wall of the body 2 may be provided with a limiting groove 211 extending along a circumferential direction of the body 2. The limiting groove 211 may be close to an end of the body 2 and located on a side away from the limiting plate 205. As shown in FIG. 8, the limiting groove 211 and the sealing groove 204 may share a groove wall, which may simplify the design structure of the spray head. As shown in FIG. 8, the limiting groove 211 does not form a closed annular shape along the circumferential direction of the body 2, the limiting groove 211 is provided with a notch 212, and one or more notches 212 may be provided. As shown in FIG. 7, the inner wall of the adapter 3 may be provided with a limiting protrusion 304. The limiting protrusion 304 is adapted to the limiting groove 211 to limit the position of the adapter 3 relative to the body 2.

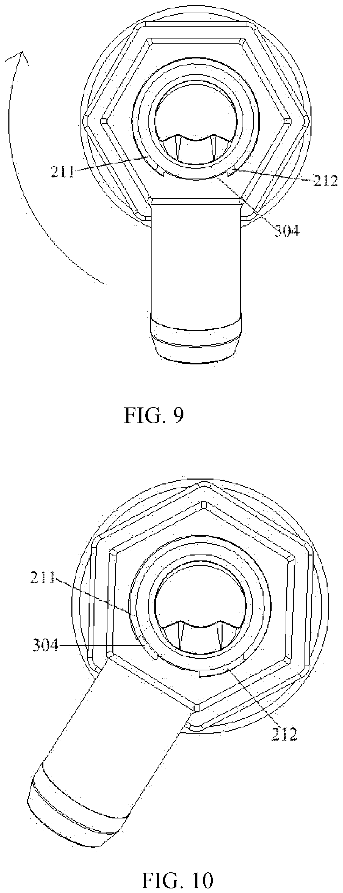

In a process of assembling the adapter 3 to the body 2, as shown in FIG. 9, the limiting protrusion 304 may be aligned with a notch 212, the adapter 3 is rotated clockwise, such that at least a portion of the limiting protrusion 304 is inserted into the limiting groove 211, as shown in FIG. 10, to realize the limiting of the adapter 3 relative to the body 2 along the lengthwise direction of the body 2.

In some exemplary embodiments, as shown in FIG. 11, the first water outlet 201b may be provided as a semicircular water nozzle, or a small semicircular water nozzle, or a large semicircular water nozzle. In an embodiment of the present application, the small semicircular nozzle is smaller than half of a circular nozzle, and the large semicircular nozzle is greater than half of the circular nozzle. A contour line of a cross section of the first water outlet 201b perpendicular to the lengthwise direction of the body 2 may include an arc segment and a wave segment, and both ends of the wave segment are smoothly connected to the arc segment. A shape of the second water outlet 202b may be designed with reference to the shape of the first water outlet 201b, which will not be described in detail herein.

In some exemplary embodiments, as shown in FIG. 11, wave segments of the first water outlet 201b and the second water outlet 202b may be provided oppositely, and the wave segments may be closer to a center of the body 2 in the radial direction than arc segments of the first water outlet 201b and the second water outlet 202b. The arc segment of the first water outlet 201b may be denoted as a first arc segment 201-1, the wave segment of the first water outlet 201b may be denoted as a first wave segment 201-2, the arc segment of the second water outlet 202b may be denoted as a second arc segment 201-3, and the wave segment of the second water outlet 202b may be denoted as a second wave segment 201-4 to facilitate identification.

In some exemplary embodiments, in a structure in which the flow area of the first water outlet 201b is smaller than the flow area of the second water outlet 202b, a minimum flow area of the second water path 202 may range from 86.5 mm² to 133.0 mm², and a minimum flow area of the first water path 201 may range from 16.0 mm² to 35.0 mm². In a structure in which the flow area of the first water outlet 201b is greater than the flow area of the second water outlet 202b, a minimum flow area of the first water path 201 may range from 86.5 mm² to 133.0 mm², and a minimum flow area of the second water path 202 may range from 16.0 mm² to 35.0 mm². Where the flow area ranges from 86.5 mm² to 133.0 mm², an equivalent circle diameter ranges from 10.0 mm to 13.0 mm. Where the flow area ranges from 16.0 mm² to 35.0 mm², the equivalent circle diameter ranges from 4.5 mm to 6.7 mm. In the embodiment of the present application, the equivalent circle diameter refers to a diameter of a circle as which a flow surface of the water path is set.

Except that the flow areas of the first water outlet 201b and the second water outlet 202b may impact spray effect of the spray head, effective lengths of the first water path 201 and the second water path 202 may also impact spray effect of the spray head. In the embodiment of the present application, a ratio of the effective length of the water path to the equivalent circle diameter of the flow area of the water outlet is an aspect ratio. For example, as shown in FIGS. 13, 14, and 15, the effective length is a water path length in which a flow area of the water path along a lengthwise direction of the spray head is equal to a flow area of the water outlet. As shown in FIGS. 13, 14, and 15, the effective length of the first water path 201 may be denoted as L1, and the effective length of the second water path 202 may be denoted as L2. For example, as shown in FIG. 16, the equivalent circle diameter of the flow area of the first water outlet 201b may be denoted as D1, and the equivalent circle diameter of the flow area of the second water outlet 202b may be denoted as D2. The aspect ratio may range between 3.5 and 5.5. When a value of the aspect ratio is less than 3.5, the spray water will diverge and the flushing function will be poor. When the value of the aspect ratio is greater than 5.5, it will cause serious flow restriction and pressure loss, which will also impact the flushing function.

For one of the first and second water outlets 201b and 202b that has a greater flow area, a shape thereof may be as close to a circular shape as possible, for example, a circular shape or a large semicircular shape or the like, which may prevent the spray water flow from diverging, so that even at a low speed, the spray water flow maintains a certain thrust, facilitating a smooth siphon formation in the toilet to carry away waste. For one of the first and second water outlets 201b and 202b that has a smaller flow area, which is in a high-velocity and low-flow spray state, if a spray water column is relatively regular and convergent, there is a problem of incomplete sewage replacement and residual dirt. Therefore, the one of the first and second water outlets 201b and 202b that has a smaller flow area, needs to have a special-shaped contour, for example, crescent shape, to achieve a slightly divergent spray effect. This allows that the one of the first and second water outlets 201b and 202b that has the smaller flow area, is used to spray, so as to clean more regions in the toilet, carry away all residual water, and achieve complete sewage replacement and better drainage performance.

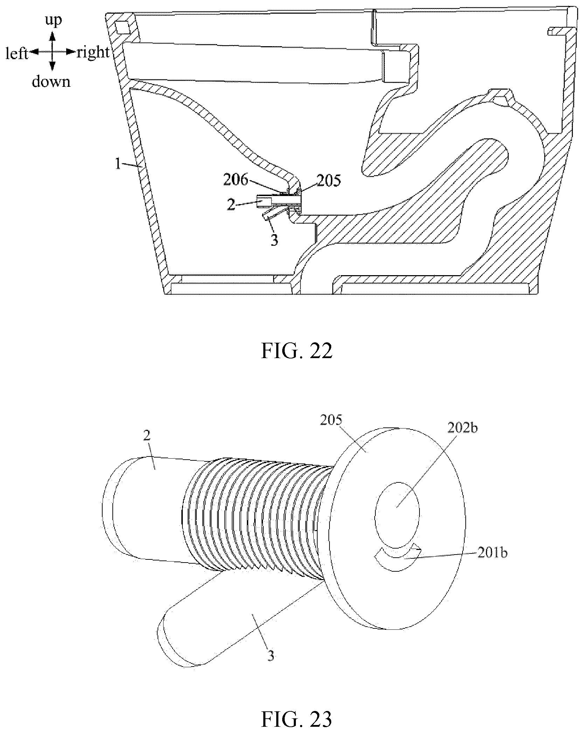

In another embodiment of the present application, as shown in FIGS. 22 to 25, a spray head is provided. The spray head may include a body 2 and an adapter 3. A main difference between the spray head provided by the present embodiment of the present application and the spray head provided by the above embodiments is that the adapter 3 is fixed to the outer wall of the body 2. In an example, the body 2 and the adapter 3 may be manufactured by an integral forming method, for example, casting or injection molding. The adapter 3 may be provided as a hollow cylinder with an equal diameter or the like. Other structures of the spray head of the present embodiment may take reference to the above embodiments, which will not be described in detail herein.

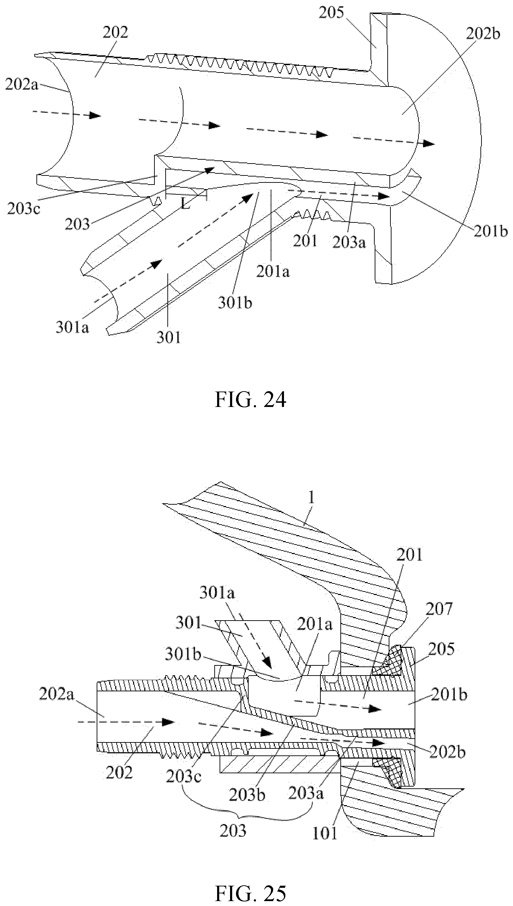

In some exemplary embodiments, as shown in FIG. 24, there is an interval L along the lengthwise direction of the body 2 between the first water inlet 201a and an end of the separating rib 203 away from the first water outlet 201b. By providing the interval L, the requirement for alignment accuracy between the flow channel 301 and the first water inlet 201a may be reduced, thereby reducing the manufacturing cost.

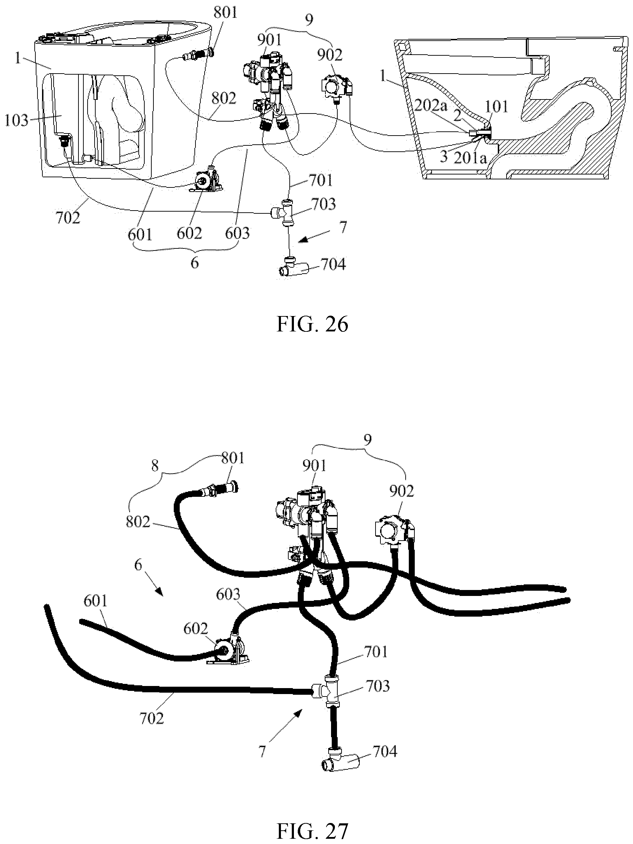

In another embodiment of the present application, as shown in FIGS. 26 to 29, a flushing system is provided. In FIG. 26, two toilet bodies 1 are shown, which is only to clearly explain connection relationship between the flushing system and the toilet body, but does not mean that the flushing system needs to be equipped with two toilet bodies. The flushing system may include a spray head described in any one of the above embodiments, a first water supply assembly 6, and a second water supply assembly 7.

In actual use, the spray head is mounted on the toilet body 1 to provide spray water to the toilet. The first water supply assembly 6 may be communicated with the second water inlet 202a for supplying water to the second water path 202. The second water supply assembly 7 may be communicated with the first water inlet 201a for supplying water to the first water path 201. A water supply pressure of the first water supply assembly 6 is different from that of the second water supply assembly 7. For example, the water supply pressure of the first water supply assembly 6 may be greater than that of the second water supply assembly 7. By differentiated designs of the flow areas of the two water outlets, the flushing effect provided by the two water supply assemblies may be ensured to be basically the same, which may improve the user satisfaction of the product. The combined design of the two water paths and the two water supply assemblies may increase the diversity of flushing system products and meet the use needs of different scenarios.

In some exemplary embodiments, as shown in FIG. 26, the first water supply assembly 6 may include a first water pipe 601 for communicating with a toilet water tank 103, a booster pump 602 for communicating with the first water pipe 601, and an outlet pipe 603 for communicating with the booster pump 602. An end of the outlet pipe 603 not communicating with the booster pump 602 may be communicated with the second water inlet 202a of the spray head.

In some exemplary embodiments, as shown in FIG. 26, the second water supply assembly 7 may include a water supply pipe 701 for communicating with tap water. By providing the booster pump 602 and the water supply pipe 701, two kinds of spray water having different water supply pressures may be supplied to the spray head. As shown in FIG. 26, one end of the water supply pipe 701 may be communicated with the first water inlet 201a of the spray head. The second water supply assembly 7 may further include a make-up pipe 702. One end of the make-up pipe 702 may be communicated with the water tank 103 for making-up water to the water tank 103. The second water supply assembly 7 may further include a three-way connecting pipe 703 and an angle valve 704 to realize connection with the tap water supply end, which may simplify the assembly operation.

In some exemplary embodiments, as shown in FIG. 27, the flushing system may further include a ring-brushing water path 8. The ring-brushing water path 8 may include a ring-brushing module 801 and a ring-brushing water pipe 802 in communication with the ring-brushing module 801. An end of the ring-brushing water pipe 802 that is not communicated with the ring-brushing module 801 may be connected to a water source to supply water to the ring-brushing module 801, so as to supply water to a toilet ring, clean the bowl cavity of the toilet body 1, and improve the cleaning effect of the toilet. For example, the first water supply assembly 6 may be communicated with an end of the ring-brushing water pipe 802 that is not communicated with the ring-brushing module 801 to supply water to the toilet ring. Alternatively, the second water supply assembly 7 may be communicated with an end of the ring-brushing water pipe 802 that is not communicated with the ring-brushing module 801 to supply water to the toilet ring. In the embodiment of the present application, the end of the ring-brushing water pipe 802 that is not communicated with the ring-brushing module 801 may also be referred to as a water inlet end of the ring-brushing water path.

In some exemplary embodiments, the flushing system may further include a controller (not shown in the figures), and a control valve 9 electrically connected to the controller. The control valve 9 is as shown in FIG. 26. The controller may be configured such that at least one of the first water supply assembly and the second water supply assembly supplies water to the toilet body 1 by controlling the control valve.

A control program may be preset in the controller, and the control program may be set according to actual use condition of the toilet. For example, it may be provided that the first water supply assembly 6 supplies water to the toilet body 1 in a default state, which may be manually switched to supply water to the toilet body 1 by the second water supply assembly 7, or manually switched to supply water to the toilet body 1 jointly by the first water supply assembly 6 and the second water supply assembly 7, or the like.

In some exemplary embodiments, as shown in FIG. 26, the control valve 9 may include only one hybrid valve 901, and the controller may be used to control the hybrid valve 901 so that water is supplied to the toilet body 1 by the first water supply assembly 6 or by the second water supply assembly 7. Alternatively, the control valve 9 may be provided to include two one-way valves, one of which is used to control the first water supply assembly 6 to realize water supply from the first water supply assembly 6 to the toilet body 1, and the other of which is used to control the second water supply assembly 7 to realize water supply from the second water supply assembly 7 to the toilet body 1. Alternatively, the control valve 9 may be provided to include two three-way valves, one of which is used to control the first water supply assembly 6 to realize water supply from the first water supply assembly 6 to the toilet body 1 and ring-brushing water supply from the first water supply assembly 6 to the ring-brushing water path 8, and the other of which is used to control the second water supply assembly 7 to realize water supply from the second water supply assembly 7 to the toilet body 1 and ring-brushing water supply from the second water supply assembly 7 to the ring-brushing water path 8. The two one-way valves or the two three-way valves each may be electrically connected to the controller so as to realize integrated control. Here, specific combination form of the control valve is not limited in the embodiment of the present application.

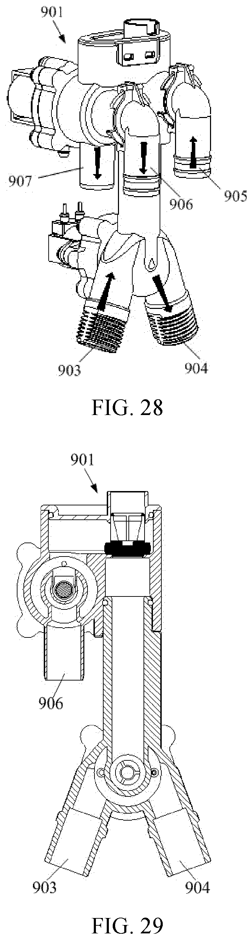

In some exemplary embodiments, as shown in FIGS. 26 and 27, the control valve 9 is provided to include a hybrid valve 901 and a dispensing valve 902 as an example. The hybrid valve 901 may be provided with a plurality of interfaces. As shown in FIG. 28, the plurality of interfaces may include a first interface 903, a second interface 904, a third interface 905, a fourth interface 906, and a fifth interface 907. In an example, the first interface 903, the second interface 904 and the dispensing valve 902 may be used to realize communication between the second water supply assembly 7 and the spray head, an end of the first interface 903 may be communicated with a water supply pipe 701, the first interface 903 is communicated with the second interface 904, the dispensing valve 902 is communicated with the second interface 904, and the dispensing valve 902 may be communicated with the first water inlet 201a via a water pipe. The water outlet of the first water supply assembly 6 may be communicated with the third interface 905, and the first water supply assembly 6 may be communicated with the second water inlet 202a via the fifth interface 907 by a valve channel in the hybrid valve 901. The fourth interface 906 may be communicated with the ring-brushing water pipe 802 and the ring-brushing module 801.

In some exemplary embodiments, the flushing system may further include a detection unit (not shown in the figures) electrically connected to the controller, and the detection unit may be integrated in a housing of a booster pump 602, or integrated in a control board of a smart toilet, or the like. The flushing system may further include a backup power source (not shown in the figures). The backup power source may be electrically connected to the controller, and the backup power source may be electrically connected to the control valve 9. The detection unit may be configured to detect a voltage at an input end of the booster pump 602 and send it to the controller. If the controller determines that the voltage at the input end of the booster pump 602 is less than a working voltage, for example, power is cut off or the voltage is too low, the controller may be configured to control the control valve 9 by controlling the backup power source, so that the second water supply assembly 7 supplies water to the toilet body 1 to realize the flushing function. If the controller determines that the voltage at the input end of the booster pump 602 is not less than the working voltage, the controller may shield the control over the backup power source, that is, the backup power source is not enabled, and the controller controls the control valve 9 so that the first water supply assembly 6 supplies water to the toilet body 1. Automatic switch between the two different water supply assemblies may be realized by mutual cooperation among the detection unit, the backup power source, the controller and the control valve provided, which may improve the intelligence of a product.

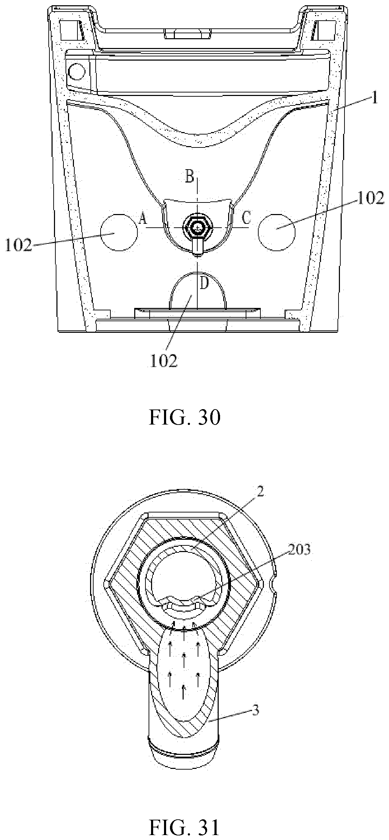

In another embodiment of the present application, a toilet is provided. As shown in FIG. 30, the toilet includes a toilet body 1 provided with a spray port and a flushing system described in any of the above embodiments. The flushing system includes a spray head mounted at the spray port. One of the first and second water outlets that has a smaller flow area is closer to a bottom of the toilet body 1, that is, closer to a floor.

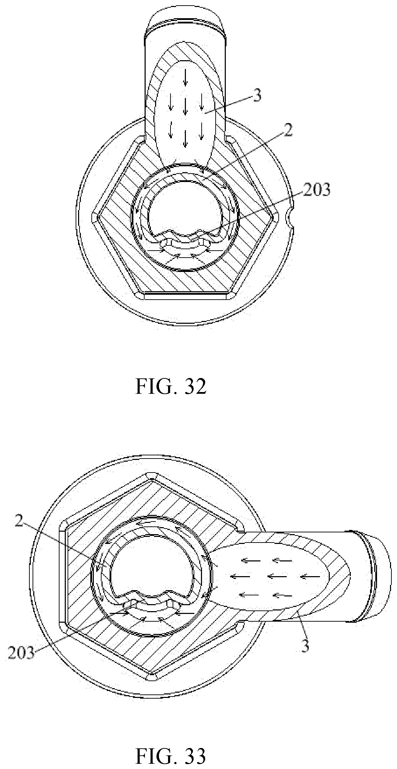

In some exemplary embodiments, as shown in FIG. 30, the toilet body 1 is provided with a pipe-passaging hole 102. FIG. 30 merely shows arrangement of several pipe-passaging holes 102 on a same toilet body 1, which does not mean that one toilet body 1 needs to be provided with three pipe-passaging holes 102. The pipe-passaging hole 102 may be a circular hole or the like. According to different toilet models, the pipe-passaging hole 102 may be provided in any one of regions A, B, C and D marked in the figure. In a structure where the adapter 3 is rotatably mounted on the body 2, an angle of the adapter 3 relative to the body 2 may be adaptively adjusted according to positions of A, B, C and D. For example, as shown in FIGS. 31 to 33, FIG. 31 is a partial sectional schematic diagram of the toilet in FIG. 30 in which a pipe-passaging hole 102 is arranged in region D, FIG. 32 is a partial sectional schematic diagram of the toilet in FIG. 30 in which a pipe-passaging hole 102 is arranged in region B, and FIG. 33 is a partial sectional schematic diagram of the toilet in FIG. 30 in which a pipe-passaging hole 102 is arranged in region C. In a structure in which the adapter 3 is fixed to the body 2, an angle of the spray head as a whole relative to the toilet body 1 may be rotated to adapt to different toilet models. The spray head provided by the embodiment of the present application may be adapted to different toilet structures and may cope with different pipeline routings, so that the toilet has high adjustment flexibility and adaptability, and the toilet equipped with the spray head has higher convenience of use.

In the description of the present disclosure, the orientation or position relationships indicated by the terms "upper", "lower", "one side", "the other side", "one end", "the other end", "edge", "relative", "corners", "periphery" or the like are based on the orientation or position relationships shown in the drawings, which are only for convenience of describing the embodiments of the present application and simplifying the description, rather than indicating or implying that the structure referred has the specific orientation, or is constructed and operated in the specific orientation, and thus cannot be interpreted as a limitation on the present disclosure.

In the description of the embodiments of the present application, unless otherwise explicitly specified and limited, the terms "connection", "direct connection", "indirect connection", "fixed connection", "mounting" and "assembly" should be understood in a broad sense. For example, it may be a fixed connection, a detachable connection, or an integral connection. The terms "mounting", "connection", and "fixed connection" may refer to a direct connection or an indirect connection through an intermediate medium, or may refer to internal communication between two elements. For those of ordinary skills in the art, the specific meanings of the aforementioned terms in the present disclosure may be understood according to specific situation.

Although embodiments disclosed by the present invention are as described above, the described contents are only embodiments used for facilitating understanding of the present invention, and are not intended to limit the present invention. It should be noted that the above embodiments or implementations are exemplary only and not limiting. Therefore, the present disclosure is not limited to the contents specifically shown and described herein. Various modifications, substitutions or omissions may be made to the form and details of implementation without departing from the scope of the present disclosure.

## Claims

1. A spray head applicable to toilet drainage, comprising:
a body provided with a first water path, a second water path, a first water inlet and a first water outlet that are communicated with the first water path, and a second water inlet and a second water outlet that are communicated with the second water path; and
an adapter mounted to the body, wherein the adapter is provided with a flow channel, and an inlet and an outlet that are communicated with the flow channel, and the outlet is communicated with the first water inlet;
wherein a flow area of the first water outlet is different from a flow area of the second water outlet.

2. The spray head according to claim 1, wherein the adapter is sleeved on the body and is rotatable relative to the body.

3. The spray head according to claim 2, wherein a water-passaging groove is provided between the adapter and the body, and the outlet is communicated with the first water inlet via the water-passaging groove.

4. The spray head according to claim 3, wherein one of the adapter and the body is provided with an annular groove, and an annular water-passaging groove is enclosed and formed by the annular groove and the other of the adapter and the body; or, the adapter and the body are each provided with an annular groove, and an annular water-passaging groove is formed by the two annular grooves.

5. The spray head according to claim 4, wherein the water-passaging groove is provided on the body, and at least a portion of a bottom of the water-passaging groove is configured to be inclined to form a flow guide wall for guiding a flow in a direction toward the first water outlet.

6. The spray head according to claim 5, wherein the flow guide wall is an oblique flat surface; or, the flow guide wall is an arc surface.

7. The spray head according to any one of claims 3 to 6, wherein the body is provided with a channel and a separating rib provided in the channel, and the separating rib is used to divide the channel into the first water path and the second water path; and
wherein a portion of the separating rib is a portion of the water-passaging groove.

8. The spray head according to claim 1, wherein the adapter is fixed to the body.

9. The spray head according to claim 8, wherein the body is provided with a channel and a separating rib provided in the channel, the separating rib is used to divide the channel into the first water path and the second water path; and there is an interval along an axial direction of the spray head between the first water inlet and an end of the separating rib away from the first water outlet.

10. The spray head according to any one of claims 1 to 6, 8, and 9, wherein a flow area of a region of the first water path close to the first water outlet is the same as a flow area of the first water outlet, and a shape of the region of the first water path close to the first water outlet is the same as a shape of the first water outlet; or, a flow area of the first water path gradually decreases in a direction toward the first water outlet; or, a flow area of the first water path gradually increases in a direction toward the first water outlet.

11. The spray head according to any one of claims 1 to 6, wherein a plurality of sealing rings are provided between the adapter and the body, and the plurality of sealing rings are respectively provided on both sides of the outlet along an axial direction of the body.

12. The spray head according to claim 11, wherein one of the adapter and the body is provided with a sealing groove; a sealing ring is embedded into the sealing groove and is in contact and cooperation with the other of the adapter and the body.

13. The spray head according to any one of claims 1 to 6, further comprising:
a limiting plate sleeved on and fixed to an outer wall of the body; and
a fixing nut sleeved on and fixed to the outer wall of the body, and clamped together with the limiting plate to a spray port of a toilet body, so as to fix the spray head.

14. The spray head according to claim 13, wherein the adapter is located between the fixing nut and the spray port of the toilet body.

15. The spray head according to claim 13, wherein the outer wall of the body is provided with an avoidance groove recessed toward an interior of the body and a limiting buckle connected to a groove wall of the avoidance groove, and the limiting buckle is elastically deformable along a radial direction of the body;
wherein the adapter is located between the limiting buckle and the fixing nut, and the limiting buckle is used to realize axial limiting of the adapter.

16. The spray head according to claim 13, wherein the outer wall of the body is provided with a limiting groove extending along a circumferential direction of the body, and the limiting groove is provided with a notch; an inner wall of the adapter is provided with a limiting protrusion; and
wherein the limiting protrusion is inserted into the limiting groove via the notch and is used together with the limiting groove for axial limiting of the adapter relative to the body.

17. The spray head according to any one of claims 1 to 6, wherein a contour line of a cross section of the first water outlet comprises an arc segment and a wave segment, and both ends of the wave segment are smoothly connected to the arc segment.

18. The spray head according to any one of claims 1 to 6, wherein a contour line of a cross section of the first water outlet comprises a first arc segment and a first wave segment, and both ends of the first wave segment are smoothly connected to the first arc segment; a contour line of a cross section of the second water outlet comprises a second arc segment and a second wave segment, and both ends of the second wave segment are smoothly connected to the second arc segment; and
wherein the first wave segment and the second wave segment are provided oppositely and close to a radial center of the body.

19. The spray head according to any one of claims 1 to 6, 8, 9, wherein
in a structure in which the flow area of the first water outlet is greater than the flow area of the second water outlet, a minimum flow area of the first water path ranges from 86.5 mm² to 133.0 mm², and a minimum flow area of the second water path ranges from 16.0 mm² to 35.0 mm²;
in a structure in which the flow area of the first water outlet is smaller than the flow area of the second water outlet, a minimum flow area of the second water path ranges from 86.5 mm² to 133.0 mm², and a minimum flow area of the first water path ranges from 16.0 mm² to 35.0 mm²; and
an aspect ratio of the first water path ranges from 3.5 to 5.5, and an aspect ratio of the second water path ranges from 3.5 to 5.5.

20. A flushing system comprising the spray head according to any one of claims 1 to 19, the body being configured to be mounted to a spray port of a toilet body; the flushing system further comprising:
a first water supply assembly for supplying water to one of the first and second water outlets that has a greater flow area; and
a second water supply assembly for supplying water to one of the first and second water outlets that has a smaller flow area;
wherein a water supply pressure of the first water supply assembly is greater than a water supply pressure of the second water supply assembly.

21. The flushing system according to claim 20, wherein the first water supply assembly comprises a first water pipe for communicating with a toilet water tank, and a booster pump in communication with the first water pipe; and the second water supply assembly comprises a water supply pipe for communicating with tap water.

22. The flushing system according to claim 20, further comprising a ring-brushing water path, wherein the first water supply assembly is communicated with a water inlet end of the ring-brushing water path so as to supply water to a toilet ring; or the second water supply assembly is communicated with a water inlet end of the ring-brushing water path so as to supply water to a toilet ring.

23. The flushing system according to claim 21, further comprising a controller and a control valve electrically connected to the controller;
wherein the controller is configured to control the control valve to operate, so as to realize water supply to the toilet body by at least one of the first water supply assembly and the second water supply assembly.

24. The flushing system according to claim 23, further comprising a detection unit electrically connected to the controller and a backup power source electrically connected to the controller; wherein the detection unit is configured to detect a voltage at an input end of the booster pump and send the voltage to the controller;
the controller is configured to control the control valve by controlling the backup power source if the controller determines that the voltage at the input end of the booster pump is less than a working voltage, such that the second water supply assembly supplies water to the toilet body; and
the controller is further configured to control the control valve if the controller determines that the voltage at the input end of the booster pump is not less than the working voltage, such that the first water supply assembly supplies water to the toilet body.

25. A toilet comprising a toilet body provided with a spray port and a flushing system according to any one of claims 20 to 24;
wherein one of the first and second water outlets that has a smaller flow area is close to a bottom of the toilet body.
